## Europäisches Patentamt
## European Patent Office
## Office européen des brevets

(19)

(11) Veröffentlichungsnummer: **0 226 117**
**B1**

(12) # EUROPÄISCHE PATENTSCHRIFT

(45) Veröffentlichungstag der Patentschrifft:
07.02.90

(51) Int. Cl. [5]: **B 21 K 1/00**

(21) Anmeldenummer: **86116755.9**

(22) Anmeldetag: **02.12.86**

(54) Vorrichtung zur Vereinzelung und zur Zufuhr von Prägestücken an einer Prägepresse.

(30) Priorität: **13.12.85 DE 3544104**

(43) Veröffentlichungstag der Anmeldung:
**24.06.87 Patentblatt 87/26**

(45) Bekanntmachung des Hinweises auf die Patenterteilung:
**07.02.90 Patentblatt 90/06**

(84) Bennante Vertragsstaaten:
**AT BE CH DE FR GB IT LI SE**

(56) Entgegenhaltungen:
**DD-A-210 182**
**GB-A-1 434 180**
**US-A-4 265 105**
**US-A-4 273 253**
**US-A-4 312 211**

(73) Patentinhaber: **L. SCHULER GmbH**
**Bahnhofstrasse 41 - 67 Postfach 1222**
**D-7320 Göppingen (DE)**

(72) Erfinder: **Ludwig, Albert**
**Alte Steige 38**
**D-7321 Lauterstein-Weissenstein (DE)**
Erfinder: **Güthle, Rainer**
**Kronengässle 1/1**
**D-7333 Ebersbach/Weller (DE)**
Erfinder: **Jarosch, Berthold**
**Lärchenweg 25**
**D-7344 Gingen (DE)**
Erfinder: **Vasel, Gerd**
**Rosensteinstrasse 2**
**D-7324 Rechberghausen (DE)**
Erfinder: **Finsterwalder, Kurt**
**Promenadeweg 40**
**D-7320 Göppingen (DE)**

EP 0 226 117 B1

**Beschreibung**

Die Erfindung betrifft eine Vorrichtung zur Vereinzelung und zur Zufuhr von im wesentlichen regelmäßig geformten Prägestücken an einer Prägepresse, mit einem schrittweise drehbaren Zuführteller, einem Stapelmagazin im Bereich und oberhalb einer von umfangsmäßig an dem Zuführteller angebrachten Aufnahmetaschen und einem wirkungsmäßig zwischen dem Stapelmagazin und dem Zuführteller angeordneten Vereinzelungsschieber, wobei Zuführteller und Vereinzelungsschieber im Takt der Prägepresse zu betätigen sind.

Das Prägen von regelmäßig geformten, ggf. unregelmäßig geformten Prägestücken zu Münzen und Medaillen ist problematisch, da die Prägestücke bereits als Ausgangsform die Endform der Münzen bzw. Medaillen aufweisen. Prägestempel und Prägering sind für derartige Prägestücke mit entsprechend ausgebildeten Aufnahmen versehen. Die Prägestücke müssen im Hinblick auf die Prägelage ausgerichtet dem Prägewerkzeug zugeführt werden. Die Zufuhr kann über einen Zuführschacht, der von einer Vororientierung kommt und zu einem Stapelmagazin führt, erfolgen. Die Prägestücke werden vermittels einer Vereinzelungseinrichtung einem Zuführteller zugeführt und durch Drehung in den Werkzeugbereich und aus diesem heraus geführt.

Aus der DE-PS-85 647 ist eine Prägepresse gattungsgemäßer Art bekannt. Jeder Aufnahmetasche ist bei der hier gezeigten Vorrichtung ein kurvengesteuerter Vereinzelungsschieber zugeordnet zur Vereinzelung von Prägestücken aus einem Stapelmagazin. Die Prägestücke werden für den Prägevorgang nicht orientiert.

Desweiteren ist eine Prägepresse gattungsgemäßer Art aus der DE-OS-3 339 387 bekannt. Bei dieser Vorrichtung werden regelmäßig geformte Prägestücke in ihrer Lage durch die Drehbewegung des Zuführtellers in Übereinstimmung mit der Lage des Prägewerkzeuges gebracht.

Demgegenüber ist es Aufgabe der Erfindung, die Prägestücke in Bezug auf ihre Lage in dem Prägewerkzeug bereits in dem Stapelmagazin auszurichten, ausgerichtet zu stapeln und zum Prägewerkzeug und aus dem Werkzeugbereich heraus zu transportieren.

Diese Aufgabe ist dadurch gelöst, daß das Stapelmagazin eine gestellfeste, sich über die Fallhöhe der Prägestücke erstreckende Führungsschiene und eine sich zumindest über eine Teillänge der Fallhöhe der Prägestücke erstreckende, an der gestellfesten Führungsschiene auf diese zu und von dieser weg beweglich gelagerte Führungsschiene aufweist, daß die Innenformen der Führungsschienen über die Länge der beweglich gelagerten Führungsschiene insgesamt eine Innenform ergeben, die der Außenform der Prägestücke angepaßt ist, und daß ein Vibrator angeordnet ist, der mit der beweglich gelagerten Führungsschiene und diese in Bewegung setzend wirkverbunden ist. Die Merkmale der weiteren Ansprüche kennzeichnen bevorzugte Ausgestaltungen der Erfindung.

Hierbei ist von Vorteil, daß die über den Zuführschacht zugeführten Prägestücke nicht in dem Stapelmagazin verkanten können oder hängenbleiben. Die Bewegung der Prägestücke bei dem Übergang von dem Stapelmagazin zu dem Zuführteller und von dem Zuführteller in das Prägewerkzeug und während der Drehung des Zuführtellers erfolgt ohne Verkanten und Taumelbewegungen der Prägestücke. Es können regelmäßig vieleckige, unregelmäßig vieleckige und auch runde Prägestücke gestapelt werden. Der Gesamtaufbau des Stapelmagazins ist einfach und kompakt und die Führungsschienen sind für eine neue Prägestückart ohne größeren Aufwand austauschbar.

Es ist zwar aus der DE-OS-2 208 572 eine Stapeleinrichtung für flache, scheibenförmige Werkstücke bekannt, wobei die den Stapelraum bildenden Seitenwände mit einem Vibrator mitvibrieren, der dem Mitschwingen einer Zuführschiene dient. Die Werkstücke selbst werden unter den vibrierenden Seitenwänden ausgerichtet ohne jegliche Genauigkeitsanforderung. Ein genaues Ausrichten von Werkstücken mit vieleckiger Grundform in Bezug auf eine durch ein Werkzeug vorgegebene Lage ist mit dieser Einrichtung nicht möglich.

Im folgenden soll die Erfindung anhand eines in der Zeichnung gezeigten Ausführungsbeispieles erläutert werden. Es zeigen:

Fig. 1    eine Vorrichtung nach der Erfindung mit einer Teil-Bruchdarstellung des Stapelmagazins,

Fig. 2    eine Draufsicht auf die Vorrichtung nach der Erfindung, wobei das Stapelmagazin nur angedeutet, als entfernbares Teil, dargestellt ist und

Fig. 3    einen Schnitt entsprechend dem Schnittverlauf III - III in Fig. 1 für ein Führungsmittel.

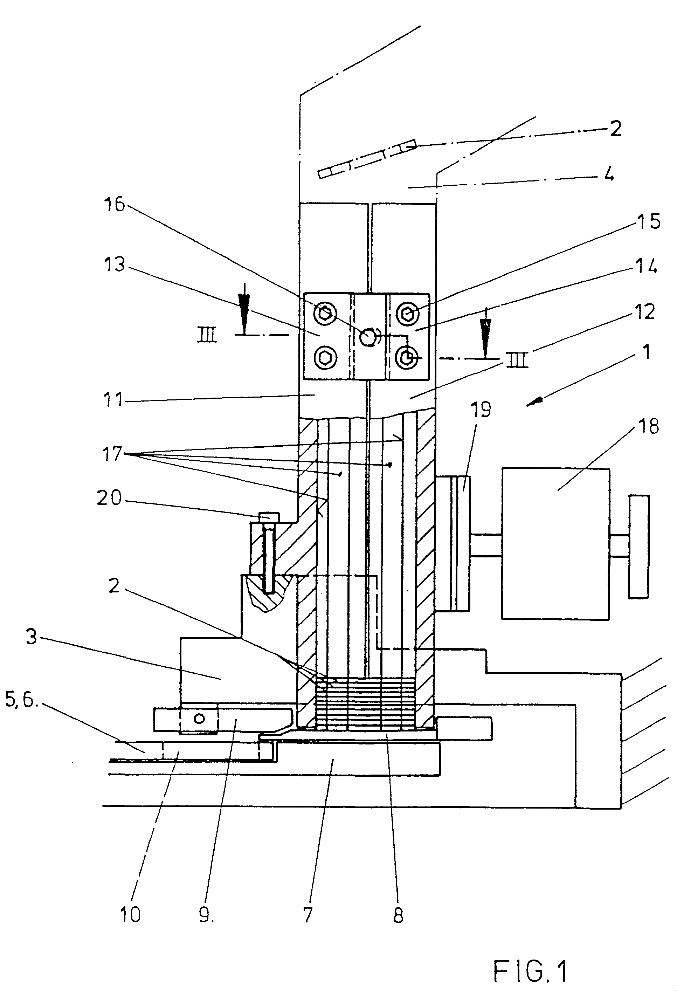

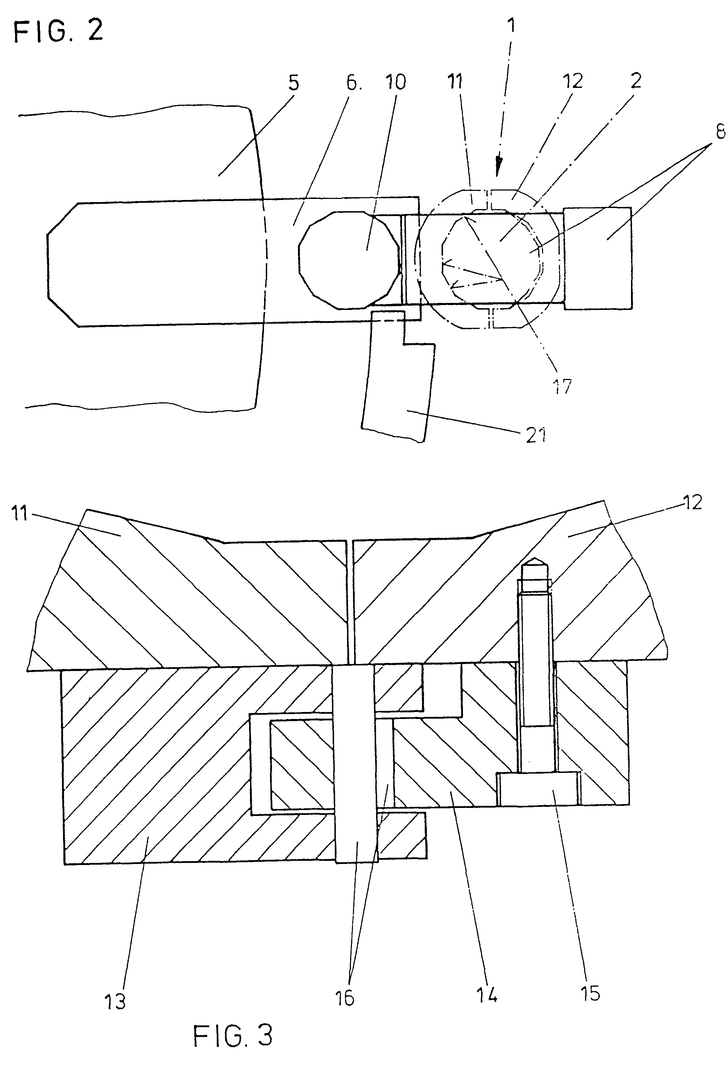

Ein Stapelmagazin 1 in Fig. 1 ist auf einem Gestellteil 3 einer Prägepresse vermittels Schraubmittel 20 befestigt. Die Zufuhr von Prägestücken 2 erfolgt über einen Zuführschacht 4 von oben in das Stapelmagazin 1. Die Prägestücke 2 werden vermittels eines Vereinzelungsschiebers 8 am unteren Endbereich des Stapelmagazines 1 abgeschoben und in die Öffnung 10 einer Aufnahmetasche 6 eines Zuführtellers 5 überführt. Die Außenform der Prägestücke 2 kann eine regelmäßig vieleckige, eine unregelmäßig vieleckige und auch eine runde sein, wobei die Berandungskanten im Fall der vieleckigen Formen mehr oder weniger stark konkav oder auch konvex gewölbt sein können. Der Zuführteller 5 dreht oberhalb einer Tischplatte 7 der Prägepresse und ist umfangmäßig mit einer Anzahl an Aufnahmetaschen 6 versehen. Ein z.B. federbelasteter Niederhalter 9 oberhalb der Aufnahmetaschen 6 dient der sicheren Übergabe des Prägestückes 2 an den Zuführteller 5, dem Bremsen des Prägestückes 2 vor dem Niederdrücken in die Öffnung 10 und dem Niederdrücken in die Öffnung 10. Fig. 2 zeigt darüberhinaus noch einen Teil einer Führungsleiste 21 im Drehbereich der Aufnahmetaschen 6.

Wie es insbesondere aus den Fig. 1 und 3 erkennbar ist, weist das Stapelmagazin 1 zwei Führungsschienen 11 und 12 auf, die sich über die Gesamtfallhöhe des Prägestückes 2 erstrekken. Die Innenform der Führungsschienen 11, 12 mit den Anlageflächen 17 entspricht der Außenform der Prägestücke 2. Die in der Fig. 1 links gezeigte Führungsschiene 11 ist fest an dem Gestellteil 3 befestigt, die Führungsschiene 12 ist über Führungsmittel an der gestellfesten Führungsschiene 11 im wesentlichen in Richtung auf diese zu und von dieser weg bewegbar. Die Führungsmittel bestehen aus in den sich gegenüber befindlichen Bereichen der Führungsschienen 11, 12 über Schraubmittel 15 angebrachten Führungsgabeln 13, Führungslaschen 14 und jeweils einer Stift-Langlochverbindung 16, die die eigentliche Stellbewegung zuläßt. An der so geführten Führungsschiene 12 ist über eine Schnellspann- bzw. Schraubeinrichtung 19 ein Vibrator 18 angeschlossen, bei dessen elektrischer Beaufschlagung die Führungsschiene 12 in Vibration versetzt wird. Die aus dem Zuführschacht 4 in das Stapelmagazin 1 herabfallenden Prägestücke 2 werden unter der Vibrationsbewegung der Führungsschiene 12 zur Anlage an den Anlageflächen 17 der gestellfesten Führungsschiene 11 gebracht. Die bewegliche Führungsschiene 12 ist in Fig. 1 bis zum Zuführschacht 4 hochgeführt. Die Führungsschiene 12 kann jedoch kürzer ausgebildet und dem unteren Bereich des Stapelmagazines 1 zugeordnet sein, wobei der oberhalb der Führungsschiene 12 befindliche Bereich des Stapelmagazins 1 für den freien Durchtritt der fallenden Prägestücke 2 entsprechend größer zu dimensionieren ist.

**Patentansprüche**

1. Vorrichtung zur Vereinzelung und zur Zufuhr von im wesentlichen regelmäßig geformten Prägestücken (2) an einer Prägepresse, mit einem schrittweise drehbaren Zuführteller (5), einem Stapelmagazin (1) im Bereich und oberhalb einer von umfangmäßig an dem Zuführteller (5) angebrachten Aufnahmetaschen (6) und einem wirkungsmäßig zwischen dem Stapelmagazin (1) und dem Zuführteller (5) angeordneten Vereinzelungsschieber (8), wobei Zuführteller (5) und Vereinzelungsschieber (8) im Takt der Prägepresse zu betätigen sind, *dadurch gekennzeichnet*, daß das Stapelmagazin (1) eine gestellfeste, sich über die Fallhöhe der Prägestücke (2) erstreckende erste Führungsschiene (11) und eine sich zumindest über eine Teillänge der Fallhöhe der Prägestücke (2) erstreckende, an der gestellfesten ersten Führungsschiene (11) auf diese zu und von dieser weg beweglich gelagerte zweite Führungsschiene (12) aufweist, daß die Innenformen der Führungsschienen (11, 12) über die Länge der beweglich gelagerten zweiten Führungsschiene (12) insgesamt eine Innenform ergeben, die der Außenform der Prägestücke (2) angepaßt ist, und daß ein Vibrator (18) angeordnet ist, der mit der beweglich gelagerten zweiten Führungsschiene (12) und diese in Bewegung setzend wirkverbunden ist.

2. Vorrichtung nach Anspruch 1, *dadurch gekennzeichnet*, daß in einander gegenüberstehenden Bereichen von ersten gestellfester Führungsschiene (11) und beweglich gelagerter zweiten Führungsschiene (12) Führungsmittel (13, 14, 16) für eine Bewegung der Führungsschiene (12) angeordnet sind.

3. Vorrichtung nach Anspruch 1, *dadurch gekennzeichnet*, daß die Führungsmittel aus je einer Führungsgabel (13) und einer Führungslasche (14) bestehen, wobei eine Stift-Langlochverbindung (16) zwischen der Führungsgabel (13) und der Führungslasche (14) die Beweglichkeit der zweiten Führungsschiene (12) zuläßt.

4. Vorrichtung nach Anspruch 1 mit einem Zuführschacht (4) oberhalb des Stapelmagazins (1) für die Zufuhr von Prägestücken (2) zu dem Stapelmagazin (1) *dadurch gekennzeichnet*, daß die beweglich gelagerte zweite Führungsschiene (12) bis unter den Zuführschacht (4) hochgeführt ist.

**Claims**

1. Device for isolating and feeding essentially regularly shaped coining pieces (2) on a coining machine, having a feed plate (5), rotatable stepwise, a stacking magazine (1) in the region of and above one of the receiving pockets (6) made peripherally on the feed plate (5), and an isolating slide (8) located to be effective between the stakking magazine (1) and the feed plate (5), feed plate (5) and isolating slide (8) being actuatable in time with the coining machine, *characterized* in that the stacking magazine (1) has a first guide rail (11) fixed to the frame and extending over the height of fall of the coining pieces (2) and a second guide rail (12) extending over at least part of the length of the height of fall of the coining pieces (2) and mounted on the first guide rail (11), which is fixed to the frame, so as to be moveable towards the latter and away from the latter, in that over the length of the movably mounted second guide rail (12) the inner shapes of the guide rails (11, 12) produce overall an inner shape which is matched to the outer shape of the coining pieces (2), and in that a vibrator (18) is provided which is operatively connected to the movably mounted second guide rail (12) and so as to set the latter in motion.

2. Device according to Claim 1, *characterized* in that guide means (13, 14, 16) for a movement of the guide rail (12) are arranged in mutually opposite regions of first guide rail (11), fixed to the frame, and movably mounted second guide rail (12).

3. Device according to Claim 1, *characterized* in that the guide means each comprise a guide fork (13) and a guide lug (14), a pin-slot connection (16) between the guide fork (13) and the guide lug (14) permitting the mobility of the second guide rail (12).

4. Device according to Claim 1, having a feed duct (4) above the stacking magazine (1) for feeding coining pieces (2) to the stacking magazine (1), *characterized* in that the movably mounted second guide rail (12) is taken up to below the feed duct (4).

**Revendications**

1. Dispositif pour séparer et amener des flans (2) à forme essentiellement régulière dans une presse à frapper, comportant un plateau d'amenée rotatif pas à pas (5), un magasin à empilage (1) à proximité et en dessus de l'une de plusieurs poches de réception (6), disposées sur le pourtour du plateau de transfert (5), et d'un tiroir de séparation (8) fonctionnant entre le magasin (1) et le plateau de transfert (5), et dans lequel le plateau de transfert (5) et le tiroir de séparation (8) sont actionnés à la cadence de la presse, *caractérisé* en ce que le magasin (1) comporte un premier profilé de guidage (11), qui est fixe et qui s'étend sur la hauteur de chute des flans (2), et un second profilé de guidage (12) qui s'étend sur au moins une partie de la hauteur de chute des flans (2) et qui est monté sur ledit premier profilé fixe (11) de manière mobile pour pouvoir se rapprocher et s'éloigner de celui-ci, en ce que les formes intérieures des profilés de guidage (11, 12), sur la longueur du second profilé mobile (12), définissent ensemble une forme intérieure qui est adaptée à la forme extérieure des flans (2), et en ce qu'il comporte un vibrateur (18) qui est relié au second profilé mobile (12) et qui met celui-ci en mouvement.

2. Dispositif selon la revendication 1, *caractérisé* en ce que des moyens de guidage (13, 14, 16) pour un mouvement du second profilé (12) sont disposés dans des zones mutuellement opposées du premier profilé fixe (11) et du second profilé mobile (12).

3. Dispositif selon la revendication 1, *caractérisé* en ce que les moyens de guidage comportent chacun une fourchette (13) et une patte de guidage (14), ainsi qu'une liaison à cheville et trou oblong (16) entre la fourchette (13) et la patte de guidage (14), permettant la mobilité du second profilé (12).

4. Dispositif selon la revendication 1, comportant une cheminée d'amenée (4) au-dessus du magasin (1) pour amener des flans (2) au magasin (1), *caractérisé* en ce que le second profilé mobile (12) s'étend vers le haut jusque sous la cheminée d'amenée (4).

FIG.1

FIG. 2

FIG. 3